Europäisches Patentamt

European Patent Office

Office européen des brevets

(11) Publication number: 0 631 801 A1

# EUROPEAN PATENT APPLICATION

(21) Application number: 94102291.5

(51) Int. Cl.⁶: B01D 19/02

(22) Date of filing: 15.02.94

(30) Priority: 28.06.93 JP 156565/93
30.09.93 JP 244101/93

(43) Date of publication of application:
04.01.95 Bulletin 95/01

(84) Designated Contracting States:
DE FR GB

(71) Applicant: KAWASAKI STEEL CORPORATION
1-1-28 Kitahonmachi-Dori
Chuo-ku
Kobe-shi
Hyogo-ken 651 (JP)

(72) Inventor: Iwatani, Toshiyuki, c/o Kawasaki
Steel Corporation
Mizushimakawasaki-Dori 1-chome
Kurashiki-shi,
Okayama 712 (JP)
Inventor: Shirakawa, Goro, c/o Kawasaki Steel
Corporation
Mizushimakawasaki-Dori 1-chome
Kurashiki-shi,
Okayama 712 (JP)

(74) Representative: Stebbing, Timothy Charles et
al
Haseltine Lake & Co.
Hazlitt House
28 Southampton Buildings
Chancery Lane
London WC2A 1AT (GB)

(54) Apparatus for liquefying bubbles using ultrasonic wave.

(57) Bubbles are allowed to flow in a groove (36) having a V-shaped section and ultrasonic waves are irradiated perpendicularly to the bottom of the groove (36). By the reflecting/focussing action due to the V-shaped side walls (38), the sound pressure is focussed on the bubbles, to thereby effectively suppress the bubbles difficult to be destroyed by the ultrasonic wave.

FIG. 8

The present invention relates to an apparatus for liquefying bubbles, and particularly to an apparatus for liquefying bubbles which is suitable to improve the unit cost of liquid and to prevent the environmental pollution when a bubbling liquid is used to be circulated.

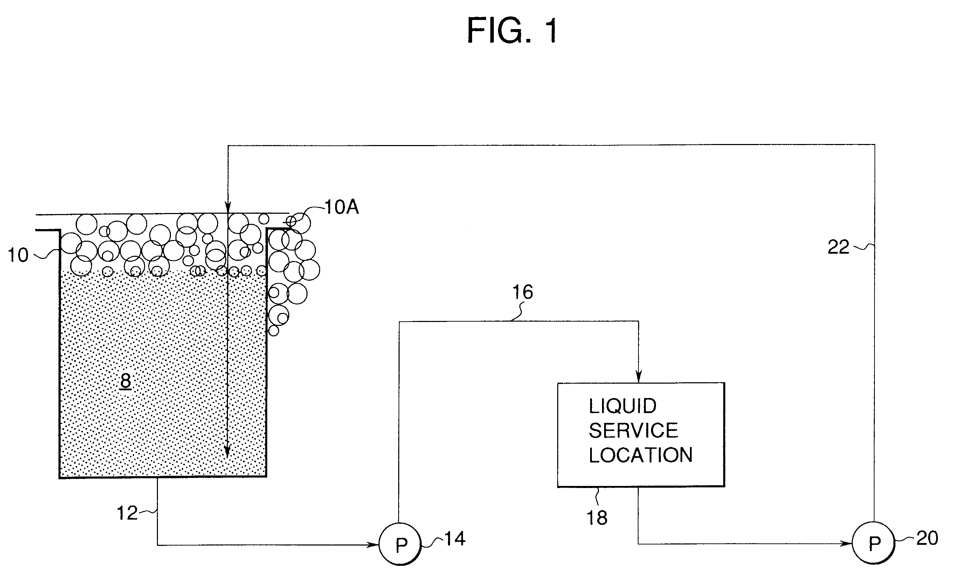

Conventionally, when a bubbling liquid is used to be circulated, such a circulating pipe line as shown in Fig. 1 is generally employed.

In this circulating pipe line, a bubbling liquid 8 is stored in a reserve tank 10, and took out from it by way of a feed nozzle 12 provided on the lower portion of the reserve tank 10. Subsequently, pressure of the bubbling liquid 8 is increased by a feed pump 14 and the liquid is press-fed to a liquid service location 18 through a feed pipe line 16. The remaining portion of the liquid used at the liquid service location 18 is increased in pressure by a return pump 20 again, and is returned to the reserve tank 10 by way of a return pipe line 22.

In such a circulating pipe line, the bubbling is mainly generated in the course from the liquid service location 18 to the return pipe line 22. Thus, the liquid containing bubbles is returned to the reserve tank 10, and accordingly, when the circulation of the liquid is continued, the space portion of the reserve tank 10 is filled with the bubbles, and then the bubbles overflow to the outside through openings 10A. The bubbles of the liquid, which overflow to the outside, is difficult to be suppressed, thus causing the environmental pollution.

Moreover, since the leakage is continued, the loss of the liquid becomes larger.

As conventional techniques of suppressing bubbles, there has been mostly used a method of chemically suppressing bubbles using a bubble suppressing agent. In this method, however, components of the liquid are changed by the undesirable combination of a liquid and a bubble suppressing agent. Namely, there little exist such bubble suppressing agents as to effectively suppress bubbles without any adverse influence on the liquid.

Moreover, there has been known a method of spraying a bubble suppressing liquid for destroying bubbles. In this case, water or the circulating liquid is used as the bubble suppressing liquid. However, when water is used, the liquid is diluted with water and cannot be reused, thus causing a large loss. Meanwhile, even when the circulating liquid itself is used, the reuse thereof is difficult because of the presence of the remaining fine bubbles.

On the other hand, there have been variously proposed methods using mechanical shock or centrifugal force; however, these methods are disadvantageous in that some liquids are liable to generate coagulation and to be transformed and deteriorated when being applied with a strong shearing force.

Further, there has been proposed a method of physically suppressing bubbles using electricity, heat or pressure; however, these methods have a disadvantage that liquid is deteriorated with the increasing temperature.

Additionally, a method of destroying the films of bubbles using ultrasonic waves has been introduced by references, in which bubbles are suppressed in the manner comparable to natural extinction, that is, in the manner capable of making small the deterioration of liquid. This method, however, has been in the basic experimental level, and has not come into practice.

In recent years, the diversification of circulating liquids has been progressed in the fields of painting, food industries and the like, and further, the kinds of bubbling liquids have been increased. Accordingly, there have been strong demands toward the technique of liquefying bubbles; however, the conventional liquefying methods have been impossible to sufficiently cope with the above-described demands.

To solve the conventional problems described above, the present invention has been made. Accordingly, a first object of the present invention is to provide an apparatus for liquefying bubbles using ultrasonic wave, which is easily applicable even for the existing equipment with a sure effect.

A second object of the present invention is to provide an apparatus for liquefying bubbles capable of recovering and reusing the liquefied bubbles.

To achieve the first object, according to the present invention, there is provided an apparatus for liquefying bubbles comprising: a groove or vessel having sectional side walls inclined with respect to the center plane or center line, to which bubbles to be liquefied are supplied; and a means for irradiating ultrasonic waves toward the bottom of the groove or vessel; whereby the bubbles are destroyed to be liquefied by direct waves from the ultrasonic wave irradiating means, and pressure waves reflected from the side walls in a plurality of directions.

The inclined angle of the side wall is, preferably, in the range from 20 ° to 45 ° .

The groove is, preferably, taken as a passage through which the bubbles flow.

A plurality of opening holes or a plurality of opening slits are, preferably, formed on the bottom of the groove or vessel.

A plurality of the side walls are, preferably, juxtaposed.

Further, to achieve the second object, according to the present invention, there is provided an apparatus for liquefying bubbles comprising: a bubble separation tank for separating bubbles from a bubbling liquid; a riser pipe for raising the bubbles separated by the bubble separation tank; a groove or vessel having sectional side walls inclined with respect to the center plane or center line, to which the bubbles raised in the riser pipe are continuously supplied from the upper portion; a means for irradiating ultrasonic waves toward the bottom of the groove or vessel; and a recover pipe for returning, to the separation tank, the bubbles which are destroyed by direct waves from the ultrasonic wave irradiating means and pressure waves reflected from the side walls in a plurality of directions and which are thus liquefied, whereby recovering and reusing the liquefied bubbles.

There exists a certain sound pressure energy required to destroy films of bubbles by ultrasonic waves, which is dependent on the magnitude of the bubbles. However, when ultrasonic waves are irradiated to bubbles having a layer with a specified thickness, there is generated such a phenomenon that only the surfaces of bubbles are vibrated and the bubbles do not disappear at all. This is because the energy is absorbed by the elastic effect of the bubble layer.

Lately, the present inventors have found the following fact: namely, there can be obtained the bubble suppressing effect being several times as much as that obtained by the ordinary irradiation, by a method wherein bubbles are continuously introduced in a groove or vessel having sectional side walls inclined with respect to the center plane or center line, and ultrasonic waves are irradiated toward the bottom of the groove or the vessel.

In the experiments made by the present inventors, ultrasonic waves having a frequency of 21KHz were irradiated under a sound pressure of 1000Pa toward each of grooves having various sectional shapes. In addition, there was used a bubbling liquid containing 2% of a surface active agent such as polyoxyethyleneether and having a magnitude of each bubble being 1-3mm in diameter.

In a groove with a rectangular sectional shape having a depth of 50mm and a width of 100mm, as shown in Fig. 3, it took a time of 40sec to suppress bubbles in an apparent volume of 1 liter; whereas in a groove with a semi-circular shape having a radius of 50mm, as shown in Fig. 4, the bubble suppressing ability was 35sec/liter. On the contrary, in a V-groove with an opening width of 141mm formed by a pair of side walls having an inclined angle of 45° with respect to the center plane (vortex angle of the V-shape: 90°), as shown in Fig. 5, the bubble suppressing ability was 15sec/liter; whereas in a V-groove with an opening width of 100mm formed by a pair of side walls having the inclined angle of 30° with respect to the center plane (vortex angle of the V-shape: 60°), as shown in Fig. 6, the bubble suppressing ability was 10sec/liter.

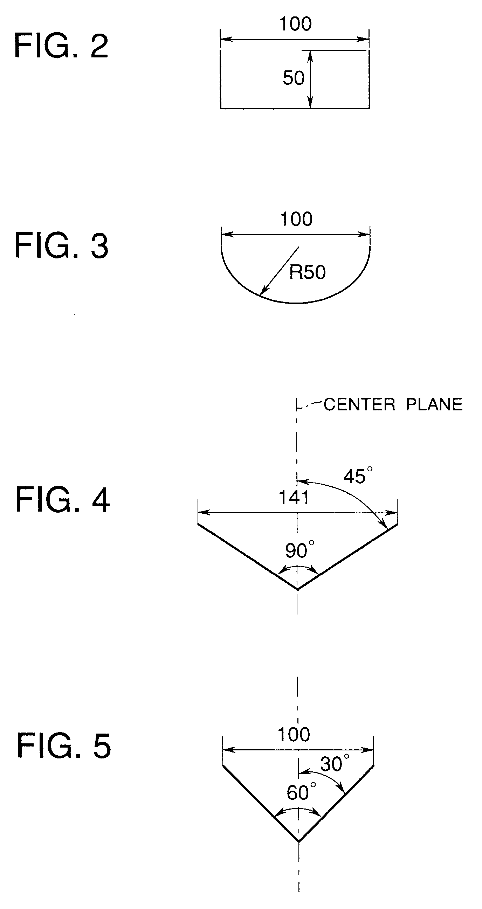

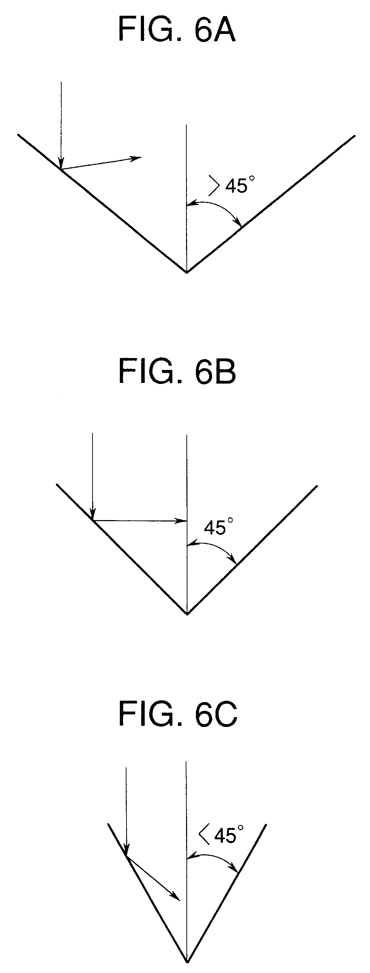

As can be seen from these experimental results, as shown in Fig. 6, the groove having the V-shaped section with the vortex angle of 60° is most effective, while the groove having perpendicular side walls shown in Fig. 3 and the groove having the circular-arc section shown in Fig. 4 are small in the effect.

It is well known that an ultrasonic wave is increased in its directivity and straightly advances when the ratio between the magnitude of the vibrational plane and the wavelength exceeds a specified value, and thus tends to be reflected and refracted at the interface of a medium similarly to light. The reason why the groove with a pair of sectional side walls inclined with respect to the center plane has a large bubble suppressing effect is as follows: namely, the sectional shape restricts bubbles from being escaped, to thereby reduce the elastic effect of the bubbles; and the ultrasonic waves reflected by the side walls act with the bubbles in the separate directions. As a consequence, by suitably selection of the inclined angle of side walls, it is possible to further enhance the effect.

It is well known that, in the reflection of a sound, an angle of incidence equals to an angle of reflection as in the case of a light. If a sound wave being in parallel to a cross-section of a groove shape or vessel shape incides. then the direction of a reflected wave is changed by a side wall inclination angle as shown in Figs. 6A - 6C.

That is, a bubble suppressing effect is increased when the reflected wave is downwardly directed, so that it is desirable that the inclination angle is not more than 45°. On the other hand, it is thought that, if the angle becomes less than 20°, then a capacity as a groove or vessel is extremely decreased, thus becoming impracticable.

Therefore, the inclined angle of the side wall is, preferably, in the range from 20° to 45°.

The discharge of the liquefied bubbles (that is, the liquid) can be performed by a method wherein the bottom of the above groove is disposed to be perpendicular or suitably inclined, and the groove itself is taken as a passage through which the bubbles flow.

Additionally, this type in which the groove is taken as the passage has the following disadvantages: Namely, the construction of the apparatus is largely restricted by formation of the inclination on the bottom of the groove and the like. Further, since bubbles are mixed with liquid in the groove, the balance between the flow rate of the liquid, inclination angle of the groove and bubble suppressing ability is unstable. Thus, when the balance is made poor, the efficiency is significantly degraded, and mist is generated by collision of ultrasonic wave with the liquid, which causes the environmental pollution.

To avoid such disadvantages, a plurality of opening holes or a plurality of opening slits may be formed on the bottom of the groove or vessel. The liquid can be discharged from the opening holes or the opening slits.

In the case that the opening holes or the opening slits are provided, since the liquefied bubbles are not stayed in the groove or vessel and are discharged, the ultrasonic waves do not collide with the liquid. Moreover, the apparatus can be constituted of a simple vessel. Additionally, bubbles are pressed into slits or holes, it is possible to enhance the bubble suppressing effect. In the experiments made by the present inventors, when slits are provided, the bubble suppressing ability (3.5 liter/min) in the case of no slits was enhanced up to 5.6 liter/min.

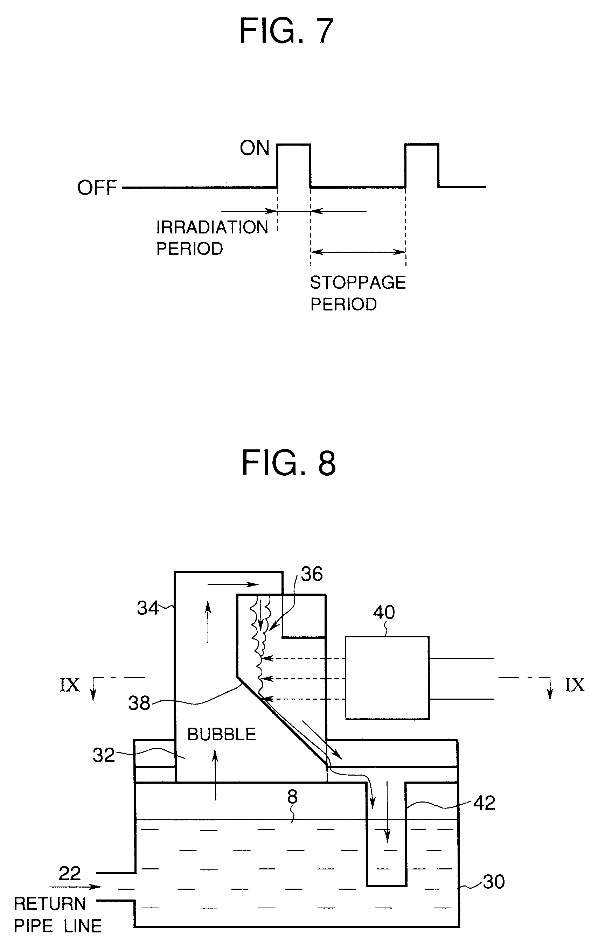

In addition, the irradiation of ultrasonic waves is not required to be continuously performed. For example, by intermittently performing the irradiation of ultrasonic waves in synchronization with the supply rate of bubbles as shown in Fig. 7, it is possible to minimize the generation of the bubbles.

The highest bubble suppressing effect can be obtained when the bubbles are present as much as about 1/2 of the depth of the groove or vessel. If the bubbles are more than this, then the effect of the reflected wave is decreased. If the bubbles are less than this, then mists are eqsily generated. Accordingly, the irradiation pattern should be determined in relation to the speed of supply of bubbles. Continuous irradiation adversely affects the service life of the apparatus in addition to the generation of mists.

Moreover, using a multi-wall groove or vessel in which a plurality of the above side walls are juxtaposed, the bubble suppressing effect can be further enhanced.

According to the present invention, since bubbles are instantaneously destroyed without exerting unnecessary shearing force on the bubbles, it is possible to reuse the recovered liquid, and hence to improve the unit cost of the liquid. Further, since bubbles are suppressed using ultrasonic waves, that is, without any special bubble suppressing agent, the running cost can be reduced. Additionally, the present invention has the excellent effects to simplify the structure, to achieve the sure effect, and to be easily applicable for the existing equipment.

These and other novel features and advantages of the present invention are described in or will become apparent from the following detailed description of preferred embodiments.

The preferred embodiments will be described with reference to the drawings, wherein like elements have been denoted throughout the figures with like reference numerals, and wherein:

Fig. 1 is a pipe line view showing a general circulating pipe line;

Fig. 2 is a diagram showing the sectional shape of a rectangular groove used for a bubble suppressing experiment which is carried out to confirm the principle of the present invention;

Fig. 3 is a diagram showing a sectional shape of an U-groove, which is equivalent to Fig. 2;

Fig. 4 is a diagram showing a sectional shape of a V-groove with a vortex of 90°, which is equivalent to Fig. 2;

Fig. 5 is a diagram showing a sectional shape of a V-groove with a vortex of 60°, which is equivalent to Fig. 2;

Figs. 6A, 6B and 6C are diagrams to show the ground of a range of a side wall inclination angle;

Fig. 7 is a time chart showing the state in which ultrasonic waves are intermittently irradiated;

Fig. 8 is a vertical sectional view showing the whole construction of a first embodiment of the present invention;

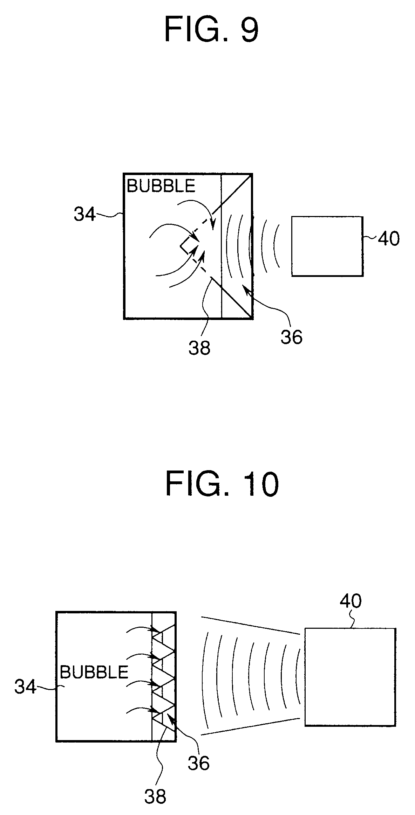

Fig. 9 is a transverse sectional taken along the line IX - IX of Fig. 8;

Fig. 10 is a transverse sectional view showing the sectional shape of main parts in a second embodiment of the present invention;

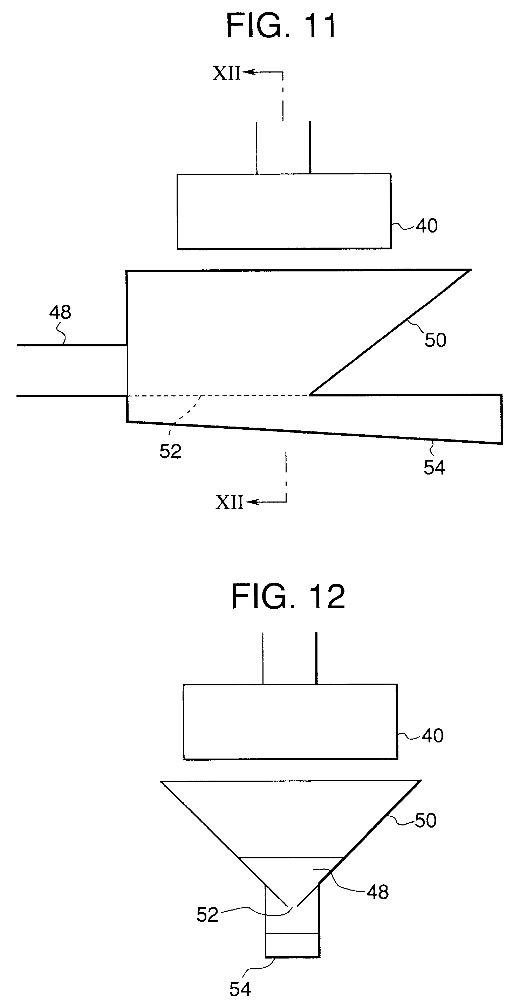

Fig. 11 is a vertical sectional view showing the construction of a third embodiment of the present invention;

Fig. 12 is a transverse sectional view taken along the line XII - XII of Fig. 11;

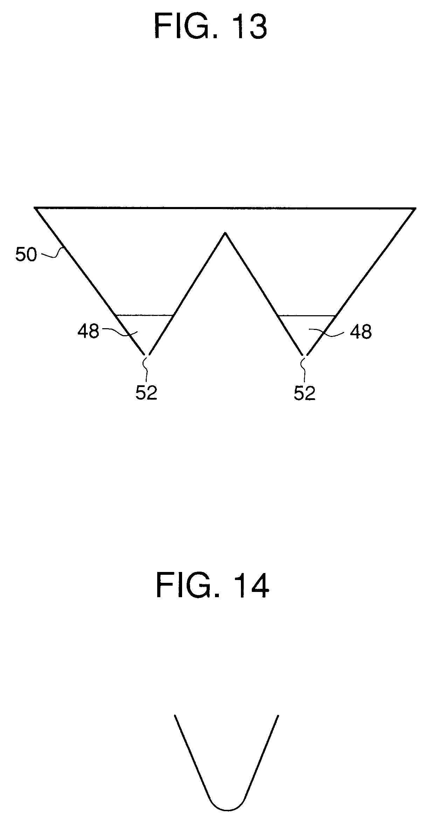

Fig. 13 is a transverse sectional view showing the construction of main parts in a fourth embodiment of the present invention;

Fig. 14 is a sectional view showing another example of the sectional shape of a bubble suppressing groove or vessel according to the present invention;

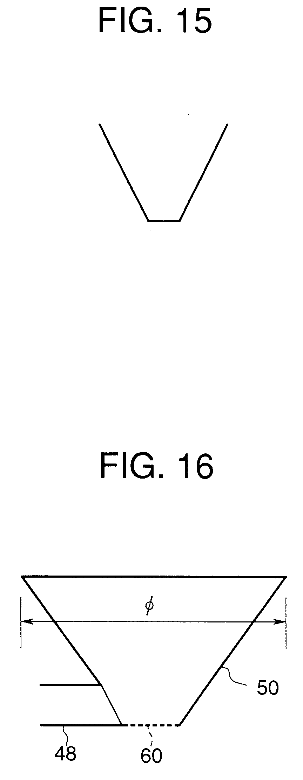

Fig. 15 is a sectional view showing a further example of the bubble suppressing groove or vessel; and

Fig. 16 is a sectional view showing an additional example of the bubble suppressing vessel.

The embodiments of the present invention will hereunder be described in detail with reference to the accompanying drawings.

An apparatus for continuously liquefying bubbles according to a first embodiment of the present invention includes, as shown in Fig. 8, a bubble separation tank 30 for separating bubbles from a bubbling liquid 8 which is continuously returned from a liquid service location through a return pipe line 22 just as in a conventional manner; an riser pipe 34 for receiving the bubbles separated by the bubble separation tank 30 from an inlet port 32 and raising the bubbles; a V-passage 36 having a pair of sectional side walls 38 inclined with respect to the center plane as shown in Fig. 9, to which the bubbles rising in the riser pipe 34 are continuously supplied from upper end; an ultrasonic horn 40 for intermittently irradiating ultrasonic waves toward the V-passage 36; and a recover tube 42 for returning, to the bubble separation tank 30, the bubbles which are destroyed by direct waves from the ultrasonic horn 40 and pressure waves reflected from the side walls 38 in a plurality of directions.

The distance between the above ultrasonic horn 40 and the V-groove like passage 36 is suitably set to enlarge an amount of suppressed bubbles.

A distance attenuation of a sound is very small when it is considered to be an area source of sound, however, with the ultrasonic wave, since the attenuation is large due to the absorption of the air, the distance between the ultrasonic horn 40 and the passage 36 should be as small as possible. However, the experiments show that, when the bubbles come into contact with the radiant surface of the horn 40, the effect is sharply decreased. Therefore, the horn 40 should be brought as near as possible within a scope where the bubbles do not come into contact with the horn.

Frequencies and intensities of the ultrasonic wave can be determined as follows:

The ultrasonic vibrator and the horn utilize the resonance, whereby the sizes thereof should have a predetermined relationship with the frequencies, and, when the frequencies become high, the apparatus becomes smaller.

For examle, if the frequencies f = 40000 Hz, and the sonic speed c of the horn material = 5000 m/s, then the wavelength $\lambda$ is obtained as follows.

$$\lambda = c/f = 5000/40000 = 0.125 \text{ m}$$

Since the diameter d of the horn takes 1/4 of the wavelength,

$$d = 0.125/4 = 0.031 \text{ m} = 31 \text{ mm}$$

When the frequencies are high as described above, the horn is decreased in size, thus becoming impracticable.

On the other hand, when the frequencies are set to less than 15000 Hz, the frequencies enter the audible range, whereby the noises become large, thus becoming impracticable.

Considering the above circumstances, the practicable zone of the frequencies may be about 15 - 40 KHz.

As for the intensities of the ultrasonic wave, there is limit of amplitude due to the vibrator and the material strength of the horn, so that the intensisties cannot be made as much as possbile.

In general, the size of the bubbles has the interrelations with the breaking sound pressure. The smaller the bubbles are in size, the difficulter the bubbles can suppress, however, if it is thought that the diameter of the bubble is 2 - 5 mm, then at least 1000 pa of the sound pressure is necessary.

In the first embodiment, the bubbles, which are generated in the bubble separation tank 30 by agitation of the liquid and blowing of gas and are stabilized, are introduced from the inlet port 32 into the riser pipe 34, and are continuously supplied from the upper portion to the V-groove like passage 36. Ultrasonic waves are intermittently irradiated to the bubbles flowing down within the V-groove like passage 36 by the ultrasonic horn 40 in a pattern, for example, shown in Fig. 7. The bubbles are destroyed by the direct waves from the ultrasonic horn 40 and the pressures waves reflected from the side walls 38 in a plurality of directions, and are liquefied. The liquefied bubbles flow down as they are, and are returned to the bubble separation tank 30 through the recover pipe 42.

A second embodiment of the present invention will be described in detail below.

The second embodiment is made using an apparatus similar to that in the first embodiment, wherein the above-described V-groove like passage 36 is replaced by a multi-wall groove 36' in which a plurality of V-shaped side walls 38 are juxtaposed as shown in Fig. 10.

The other points are the same as in the first embodiment, and therefore, the explanation thereof is omitted.

In this embodiment, since the depth (thickness) of the bubble flow is made small, it is possible to reduce the elastic absorption effect due to the bubble layer, and to further effectively suppress the bubbles.

A third embodiment of the present invention will be described in detail below.

In the third embodiment, as shown in Figs. 11 and 12, a bubble suppressing vessel 50 having a V-shaped section is disposed in the horizontal direction, and opening slits 52 each having a width of 0.5mm, for example, are formed on the bottom of the bubble suppressing vessel 50 which serve as a discharge port to a drain groove 54. The ultrasonic horn 40 is disposed in the horizontal direction to be matched to the bubble suppressing vessel 50.

In the third embodiment, the bubbles fed from a bubble inlet port 48 into the bubble suppressing vessel 50 are liquefied by ultrasonic waves irradiated from the ultrasonic horn 40, and are discharged into the drain groove 54 through the opening slits 52.

A fourth embodiment of the present invention will be described in detail below.

The fourth embodiment is made using an apparatus similar to that in the third embodiment, wherein the sectional shape of the bubble suppressing vessel 50 is replaced into a W-shape having two V-shapes as shown in Fig. 13.

The other points are the same as in the third embodiment, and therefore, the explanation thereof is omitted.

According to the third and fourth embodiments, the bubble suppressing effect is increased by the presence of the slits as compared with the first and second embodiments, so that it is possible to shorten the length of the vessel and hence to make compact the apparatus. Moreover, the constructional restriction in the disposition of the apparatus is eliminated, which enables the enlargement in the application. The fine adjustment of the apparatus is also eliminated. Additionally, it is possible to suppress the generation of mist at minimum.

In addition, in any of the above-described embodiments, the sectional shape of the bubble suppressing groove or vessel is formed in the V-shape; however, the present invention is not limited thereto, and the sectional shape may be formed into an U-shape near the V-shape as shown in Fig. 14, or may be formed in a trapezoidal shape near the V-shape as shown in Fig. 15. In particular, in the bubble suppressing vessel 50 shown in the third embodiment, the sectional shape may be an inverse conical shape as shown in Fig. 16, and a plurality of opening holes 60 for drainage may be provided on the horizontal bottom surface.

It should be apparent to those skilled in the art that the above-described embodiments are merely illustrative which represent the applications of the principles of the present invention. Numerous and varied other arrangements can be readily devised by those skilled in the art without departing from the spirit and the scope of the invention.

## Claims

1. An apparatus for liquefying bubbles comprising: a groove (36) having sectional side walls (38) inclined with respect to its center plane, to which bubbles to be liquefied are supplied; and a means (40) for irradiating ultrasonic waves toward bottom of said groove (36); wherein the bubbles are destroyed to be liquefied by direct waves from said ultrasonic wave irradiating means (40) and pressure waves reflected from said side walls (38) in a plurality of directions.

2. An apparatus for liquefying bubbles according to claim 1, wherein inclined angle of said side wall (38) is in range from 20° to 45° with respect to the center plane.

3. An apparatus for liquefying bubbles according to claim 1, wherein said groove (36) is takes as a passage through which the bubbles flow.

4. An apparatus for liquefying bubbles according to claim 1, wherein a plurality of opening holes or a plurality of slits (52) are formed on the bottom of said groove.

5. An apparatus for liquefying bubbles according to claim 4, wherein a plurality of said side walls (38) are juxtaposed.

6. An apparatus for liquefying bubbles comprising: a vessel (50) having a sectional side walls inclined with respect to its center line or center plane, to which bubbles to be liquefied are supplied; and a means (40) for irradiating ultrasonic waves toward bottom of said vessel (50); wherein the bubbles are destroyed to be liquefied by direct waves from said ultrasonic wave irradiating means (40) and pressure waves reflected from said side walls in a plurality of directions.

7. An apparatus for liquefying bubbles according to claim 6, wherein inclined angle of said side wall is in range from 20° to 45° with respect to the center line or center plane.

8. An apparatus for liquefying bubbles according to claim 6, wherein a plurality of opening holes (60) or a plurality of slits (52) are formed on the bottom of said vessel (50).

9. An apparatus for liquefying bubbles according to claim 8, wherein a plurality of said side walls are juxtaposed.

10. An apparatus for liquefying bubbles comprising: a bubble separation tank (30) for separating bubbles from a bubbling liquid; a riser pipe (34) for raising the bubbles separated by said bubble separation tank (30); a groove (36) or vessel having sectional side walls inclined with respect to its center plane or center line, to which the bubbles raised in said riser pipe (34) are continuously supplied from its upper portion; a means (40) for irradiating ultrasonic waves toward bottom of said groove (36) or vessel; and a recover pipe (42) for returning, to said separation tank (30), the bubbles which are destroyed by direct waves from said ultrasonic wave irradiating means (40) and pressure waves reflected from said side walls in a plurality of directions and are liquefied; wherein liquefied bubbles are recovered and reused.

# FIG. 1

EP 0 631 801 A1

FIG. 2

100

50

FIG. 3

100

R50

CENTER PLANE

FIG. 4

141

45°

90°

FIG. 5

100

30°

60°

# FIG. 6A

$> 45°$

# FIG. 6B

$45°$

# FIG. 6C

$< 45°$

# FIG. 7

ON

OFF

IRRADIATION PERIOD

STOPPAGE PERIOD

# FIG. 8

# FIG. 9

# FIG. 10

# FIG. 11

XII ←

40

48

50

52

54

XII ←

# FIG. 12

40

50

48

52

54

# FIG. 13

50

48

52

48

52

# FIG. 14

# FIG. 15

# FIG. 16

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | US-A-3 218 782 (J.LITSIOS ET AL.)<br><br>* the whole document *<br>--- | 1,3,4,6, 10 | B01D19/02 |
| A | US-A-3 425 951 (M.ISHIWATA)<br>* claim 1; figure 1 *<br>--- | 1,10 | |
| A | DATABASE WPI<br>Week 8433, 26 September 1984<br>Derwent Publications Ltd., London, GB;<br>AN 84-206503<br>& SU-A-1 063 430 (APPL BIOCHEM RES) 30 December 1983<br>* abstract *<br>----- | 1,10 | |

**TECHNICAL FIELDS SEARCHED** (Int.Cl.5)

B01D

The present search report has been drawn up for all claims

| Place of search | Date of completion of the search | Examiner |
|---|---|---|
| BERLIN | 13 September 1994 | Bertram, H |